# EUROPÄISCHE PATENTANMELDUNG

(11) **EP 4 666 830 A1**
(43) Veröffentlichungstag der Anmeldung: **24.12.2025**
(21) Anmeldenummer: 25183923.9
(22) Anmeldetag: 19.06.2025
(51) Int. Cl.: A01D 34/03, A01D 34/14, A01D 34/30, A01D 34/404, A01D 34/408

(54) **BALKENMÄHVORRICHTUNG MIT EINEM TRAGRAHMEN**

(30) Priorität: 21.06.2024 CH 6742024
(71) Anmelder: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG

(57) **Zusammenfassung**

Eine Balkenmähvorrichtung mit:
- Einem Tragrahmen (110) mit einer Aufhängung (112) zum Anordnen der Balkenmähvorrichtung (100) an einem einachsigen oder an einem zweiachsigen Fahrwerk.
- Einem ersten Laufschuh (120) und einem zweiten Laufschuh (130), welche über den Tragrahmen (110) miteinander verbunden sind.
- Eine Schneidvorrichtung (160), welche sich parallel zu einem Messerbalken (150) zwischen dem ersten Laufschuh (120) und dem zweiten Laufschuh (130) erstreckt und mittels einer ersten Übertragungseinheit (180) oszillierend bewegbar ausgebildet ist, wobei die erste Übertragungseinheit (180) an dem ersten Laufschuh (120) angeordnet ist, und
eine erste Flexwelle (200), welche dazu ausgebildet ist, eine Antriebsbewegung von der Aufhängung (112) zu der ersten Übertragungseinheit (180) zu übertragen.

## Beschreibung

### Technisches Gebiet

Die Erfindung betrifft eine Balkenmähvorrichtung mit einem Tragrahmen mit einer Aufhängung zum Anordnen der Balkenmähvorrichtung an einem einachsigen oder an einem zweiachsigen Fahrwerk.

### Stand der Technik

Balkenmähvorrichtungen sind im Stand der Technik hinlänglich bekannt. Dabei handelt es sich insbesondere um Vorrichtungen zum Mähen von Mähgut, z. B. von Gras, Getreide oder dünnen Gehölzen. Solche Balkenmähvorrichtungen können mit einem, z. B. rohrförmigen, Tragrahmen stabilisiert und gehalten werden. Üblich ist es ausserdem eine Balkenmähvorrichtung an einem einachsigen oder einem zweiachsigen Fahrwerk anzuordnen, insbesondere mittels einer Aufhängung. Bei den Fahrwerken kann es sich z. B. um das Fahrwerk eines Traktors, eines Einachsschleppers oder auch um das Fahrwerk eines, insbesondere handgeführten, Balkenmähers (auch Motormäher) handeln. Solche Balkenmäher weisen insbesondere einen Antrieb und eine Lenkstange auf, mit welcher Lenkstange der Balkenmäher von einem Benutzer führbar ist. Dabei ist es insbesondere vorgesehen, dass der Benutzer zur Führung des Balkenmähers hinter dem Balkenmäher hergeht, wobei der Antrieb den Balkenmäher vorwärtsbewegt und auch z. B. eine Klingenbewegung der Balkenmähvorrichtung antreibt.

Nachteilig im Stand der Technik ist, dass bekannte Balkenmähvorrichtungen ein hohes Gewicht aufweisen und damit für einen Benutzer zu einer hohen Arbeitsbelastung führen können. Das hohe Gewicht resultiert beispielsweise dadurch, dass eine Antriebsbewegung mittels eines Getriebes oder eine Hydraulik auf die Mähmesser übertragen werden muss. Hinzu kommt, dass der Schwerpunkt derartiger Balkenmäher asymmetrisch ausgebildet ist, wodurch die Bedienung zusätzlich erschwert wird. Ausserdem ist es durch das hohe Gewicht notwendig, die bekannten Balkenmähvorrichtungen in ihrer Breite einzuschränken, wodurch sie weniger effizient mähen und damit ebenfalls die Arbeitsbelastung eines Benutzers erhöhen. Ein weiterer Nachteil im Stand der Technik ist, dass bekannte Balkenmähvorrichtungen keine ausreichenden Sicherheitsvorrichtungen aufweisen. Beispielsweise kommt es häufig vor, dass die Mähmesser im Einsatz auf grosse Steine treffen. Dieser Aufprall stellt für den Bediener ein hohes Verletzungsrisiko dar. Sicherheitsvorrichtungen sind aufgrund des hohen Gewichts bekannter Balkenmähvorrichtungen technisch schwer realisierbar.

### Darstellung der Erfindung

Aufgabe der Erfindung ist es, eine dem eingangs genannten technischen Gebiet zugehörende Balkenmähvorrichtung zu schaffen, welche die Nachteile aus dem Stand der Technik zumindest teilweise überwindet und leichter und effizienter ist. Zusätzlich ist es die Aufgabe der Erfindung eine Balkenmähvorrichtung zu schaffen, welche für einen Benutzer sicherer ist und ein reduziertes Verletzungsrisiko darstellt.

Die Lösung der Aufgabe ist durch die Merkmale des Anspruchs 1 definiert. Gemäss der Erfindung handelt es sich um eine Balkenmähvorrichtung mit:
Einem Tragrahmen mit einer Aufhängung zum Anordnen der Balkenmähvorrichtung an einem einachsigen oder an einem zweiachsigen Fahrwerk,
einem ersten Laufschuh und einem zweiten Laufschuh, welche über den Tragrahmen miteinander verbunden sind,
eine Schneidvorrichtung, welche sich parallel zu einem Messerbalken zwischen dem ersten Laufschuh und dem zweiten Laufschuh erstreckt und mittels einer ersten Übertragungseinheit oszillierend bewegbar ausgebildet ist, wobei die erste Übertragungseinheit an dem ersten Laufschuh angeordnet ist, und
eine erste Flexwelle, welche dazu ausgebildet ist, eine Antriebsbewegung von der Aufhängung zu der ersten Übertragungseinheit zu übertragen.

Die Aufhängung des Tragrahmens umfasst dabei insbesondere eine Aufnahme für eine Antriebswelle zum Antreiben der Übertragungseinheit und der Schneidvorrichtung. Eine oszillierende Bewegung der Schneidvorrichtung findet dabei insbesondere entlang des Messerbalkens statt. Die Schneidvorrichtung ist hierbei insbesondere dazu vorgesehen, eine Mähfunktion auszuüben und Mähgut zu schneiden.

Bei der ersten Flexwelle handelt es sich insbesondere um eine biegsame Welle, die innerhalb eines Biegebereichs reversibel verbiegbar ist. Dabei ist die erste Flexwelle insbesondere drahtförmig, z. B. mit einem runden oder sternförmigen Querschnitt. Sie kann z. B. ein Material wie Aluminium, oder eine Eisenlegierung umfassen. Insbesondere ist ein Durchmesser des Querschnitts der ersten Flexwelle kleiner als eine maximale Länge der ersten Flexwelle im ausgestreckten Zustand, insbesondere beträgt der Durchmesser weniger als 5%, bevorzugt weniger als 2%, der Länge. Bevorzugter Weise ist die erste Flexwelle in einem gebogenen Zustand in der Balkenmähvorrichtung gelagert. Insbesondere weisen zwei gegenüberliegende Längsenden der ersten Flexwelle dabei nicht entlang einer gemeinsamen Geraden und liegen somit zueinander versetzt.

Von der ersten Übertragungseinheit wird insbesondere eine Drehbewegung der Flexwelle in eine oszillierende Bewegung der Schneidvorrichtung umgewandelt. Insbesondere umfasst die erste Übertragungseinheit einen Exzenter.

Durch den erfindungsgemäßen Gegenstand wird eine besonders leichte und effiziente Balkenmähvorrichtung geschaffen. Insbesondere die erste Flexwelle erlaubt es, auf eine schwerere starre Antriebswelle zu verzichten. Zudem wird kein Umlenkgetriebe benötigt. Damit wiederum kann auch die Schneidvorrichtung grösser dimensioniert werden, was die erfindungsgemässe Balkenmähvorrichtung besonders effizient macht.

In einer bevorzugten Ausführung der Erfindung umfasst die Schneidvorrichtung ein erstes Schneidmesser und ein zweites Schneidmesser, wobei das erste Schneidmesser und das zweite Schneidmesser relativ zueinander bewegbar ausgebildet sind.

Das erste und das zweite Schneidmesser umfasst dabei jeweils insbesondere ein Metallelement mit einer Schneide zum Schneiden von Mähgut. Bevorzugt sind das erste und das zweite Schneidmesser dabei relativ zueinander beweglich, bevorzugt auch relativ zum Messerbalken beweglich, am Messerbalken gelagert. Insbesondere sind das erste und das zweite Schneidmesser entlang einer maximalen Länge des Messerbalkens bewegbar gelagert.

Mit zwei relativ bewegbaren Schneidmessern wird ein besonders effizientes Mähen von Mähgut ermöglicht.

Alternativ kann die Schneidvorrichtung auch nur ein Schneidmesser aufweisen, welches bewegbar gelagert ist.

In einer bevorzugten Ausführung der oben genannten Ausführungsform mit einem ersten und einem zweiten Schneidmesser handelt es sich um eine erfindungsgemässe Balkenmähvorrichtung mit einer zweiten Übertragungseinheit, welche an dem zweiten Laufschuh angeordnet ist, wobei die zweite Übertragungseinheit dazu ausgebildet ist, das zweite Schneidmesser oszillierend zu bewegen. Die zweite Übertragungseinheit entspricht insbesondere der ersten Übertragungseinheit, allerdings z. B. gespiegelt.

Vorteil einer zweiten Übertragungseinheit ist eine gleichmässige Gewichtsverteilung innerhalb der Balkenmähvorrichtung. Ein weiterer Vorteil liegt darin, dass weniger Belastung auf der ersten Übertragungseinheit liegt und die Übertragungseinheiten damit einem geringeren Verschleiss ausgesetzt sind. Ebenfalls wird mit der zweiten Übertragungseinheit die Belastung der ersten Flexwelle reduziert, insbesondere eine auf die erste Flexwelle wirkende Torsionskraft, wodurch diese z.B. weniger schnell verschleisst. So kann die erste Flexwelle ausserdem weniger dick ausgeführt werden und ist damit besonders leicht.

Alternativ können z. B. auch beide Schneidmesser mit einer Übertragungseinheit angetrieben werden.

In einer bevorzugten Ausführung der Erfindung mit einer zweiten Übertragungseinheit handelt es sich um eine erfindungsgemässe Balkenmähvorrichtung mit einer zweiten Flexwelle, welche dazu ausgebildet ist, eine Antriebsbewegung von der Aufhängung zu der zweiten Übertragungseinheit zu übertragen. Die zweite Flexwelle entspricht dabei insbesondere der ersten Flexwelle. Insbesondere verläuft die zweite Flexwelle von der Aufhängung aus entlang des Tragrahmens diametral zur ersten Flexwelle.

Vorteil einer zweiten Flexwelle ist eine besonders leichte und robuste Konstruktion. So wird die auftretende Torsionskraft zwischen der Aufhängung und den zwei Übertragungseinheiten auf zwei Flexwellen aufgeteilt womit sowohl die erste als auch die zweite Flexwelle nur gering belastet wird. Damit wird eine besonders leichte Balkenmähvorrichtung erreicht, die auch so breit ausgeführt werden kann, dass sie auch besonders effizient ist.

Alternativ kann die zweite Übertragungseinheit auch z.B. durch eine unflexible Welle ausgehend von der ersten Übertragungseinheit angetrieben werden.

Eine bevorzugte Ausführung der Erfindung ist eine erfindungsgemässe Balkenmähvorrichtung mit einem Kupplungselement zum Einbringen der Antriebsbewegung und einer V-förmig ausgebildeten Keilriemenanordnung zum Übertragen der Antriebsbewegung auf die erste Flexwelle und die zweite Flexwelle.

Insbesondere ist das Kupplungselement an der Aufhängung angeordnet. Bevorzugt umfasst das Kupplungselement eine erste und eine zweite Führungsscheibe, zur Übertragung der Antriebsbewegung auf die erste Flexwelle bzw. die zweite Flexwelle. Insbesondere sind die erste Führungsscheibe und die zweite Führungsscheibe dabei zentriert auf einer Führungsscheibenachse angeordnet. Die V-förmige Keilriemenanordnung umfasst insbesondere einen ersten und einen zweiten Keilriemen, welche insbesondere so zu einander angeordnet sind, dass sie gemeinsam eine führungsscheibenseitige Achse umlaufen und jeweils eine flexwellenseitige Achse, welche flexwellenseitigen Achsen voneinander beabstandet sind. Insbesondere ist dieser Abstand grösser als ein maximaler Umlaufdurchmesser jedes Keilriemens und verläuft dabei z.B. parallel zum Messerbalken. Somit ergibt sich eine V-förmige Anordnung der zwei Keilriemen. Dabei führt insbesondere die erste Führungsscheibe den ersten Keilriemen und die zweite Führungsscheibe den zweiten Keilriemen. Insbesondere ist der erste Keilriemen und der zweite Keilriemen der Keilriemenanordnung flexwellenseitig mit einer dritten bzw. einer vierten Führungsscheibe geführt. Die dritte und die vierte Führungsscheibe ist dabei insbesondere drehfest mit der ersten Flexwelle bzw. der zweiten Flexwelle verbunden.

Durch das Kupplungselement mit der V-förmigen Keilriemenanordnung wird die Antriebsbewegung auf die Flexwellen übertragen. Kommt es dabei z.B. zur Blockade einer der Flexwellen, kann die Keilriemenanordnung durchrutschen, ohne dabei Schaden zu nehmen. Dadurch wird die Balkenmähvorrichtung besonders robust. Ausserdem hat sich herausgestellt, dass ein solches Kupplungselement mit der V-förmigen Keilriemenanordnung besonders einfach herzustellen ist, wodurch die Balkenmähvorrichtung besonders günstig wird.

Alternativ kann Balkenmähvorrichtung z.B. ein T-Stück für die zwei Flexwellen umfassen oder die Flexwellen können miteinander drehfest verbunden sein.

Eine besonders bevorzugte Ausführung aller oben genannten Ausführungsformen der Erfindung ist eine erfindungsgemässe Balkenmähvorrichtung, mit einem Führungsmittel zum Führen der ersten Flexwelle von der Aufhängung zu der ersten Übertragungseinheit.

Insbesondere ist das Führungsmittel ein erstes Führungsmittel und die Balkenmähvorrichtung umfasst ein zweites Führungsmittel zum Führen der zweiten Flexwelle von der Aufhängung zu der zweiten Übertragungseinheit.

Vorteil eines solchen Führungsmittels ist dabei ein Verhindern von Vibrations- und Schlagbewegungen der ersten Flexwelle, welche z. B. eine Kraftübertragung über die erste Flexwelle beeinträchtigen können und auch deren Verschleiss erhöhen. Damit wird die Balkenmähvorrichtung besonders effizient. Beispielsweise umfassen die Führungsmittel Führungsrohre die zumindest Abschnittsweise eingesetzt werden.

Alternativ kann die erste Flexwelle auch ohne Führungsmittel gelagert sein.

In einer bevorzugten Ausführung der obigen Ausführung der Erfindung umfasst das Führungsmittel eine Mehrzahl an Befestigungen zum Fixieren der ersten Flexwelle an dem Führungsmittel. Insbesondere umfasst die Mehrzahl an Befestigungen eine Mehrzahl an Rohrschellen. Dabei kann z.B. eine oder mehrere Rohrschellen der Mehrzahl an Rohrschellen am Tragrahmen gelagert sein. Die Flexwelle kann dabei insbesondere innerhalb der Mehrzahl an Rohrschellen geführt sein. Alternativ kann die Mehrzahl an Befestigungen auch eine Mehrzahl an flexiblen Schläuchen umfassen.

Die Mehrzahl an Befestigungen hat den Vorteil, dass die erste Flexwelle nicht aus dem Führungsmittel geraten kann, z. B. bei starken Vibrationen der Balkenmähvorrichtung. Damit wird eine besonders robuste Balkenmähvorrichtung geschaffen.

Alternativ kann das Führungsmittel auch ohne Befestigungsmittel ausgeführt sein, z.B. als Distanzmittel, welches die Flexwelle spannt.

In einer besonders bevorzugten Ausführung der Erfindung, beträgt eine Länge des ersten und/oder des zweiten Schneidmessers in Richtung einer Längserstreckungsrichtung des Messerbalkens zumindest 1 m, insbesondere zumindest 2 m, insbesondere zumindest 3 m, insbesondere zumindest 5 m.

Die Längserstreckungsrichtung des Messerbalkens entspricht dabei insbesondere eine Richtung einer maximalen Länge des Messerbalkens. Insbesondere ist das erste und/oder das zweite Schneidmesser einstückig ausgeführt.

Eine solche Länge sorgt dabei für eine besonders effiziente Balkenmähvorrichtung. Eine Ausführung des ersten und/oder zweiten Schneidmessers mit einer solchen Länge führt insbesondere zu einem besonders geringen Gewicht des ersten und/oder zweiten Schneidmessers und damit auch zu einer geringen Torsionskraft auf die erste Flexwelle, insbesondere auch auf die zweite Flexwelle. Erst die erste Flexwelle erlaubt ausserdem eine grosse Länge der Schneidmesser bei gleichzeitig geringem Gewicht und damit einer einfachen Handhabung und einer hohen Effizienz.

Insgesamt wird so eine besonders robuste, leichte und effiziente Balkenmähvorrichtung geschaffen.

Alternativ kann das erste und/oder das zweite Schneidmesser auch kürzer ausgeführt sein, z.B. kürzer als 1 m.

In einer bevorzugten Ausführung der Erfindung bilden der erste Laufschuh, der zweite Laufschuh, der Messerbalken und die Schneidvorrichtung eine Mäheinheit, und die Mäheinheit ist um eine Drehachse relativ zu dem Tragrahmen rotierbar ausgebildet.

Insbesondere verläuft die Drehachse parallel zur Längsrichtung des Messerbalkens. Bevorzugt sind der erste Laufschuh und der zweite Laufschuh hierzu drehbar am Tragrahmen gelagert.

Insbesondere ist die Drehachse vom Mähbalken beabstandet, bevorzugt in einer Richtung die orthogonal zur Länge des Mähbalkens verläuft. Insbesondere liegt die Drehachse bei einem Mähvorgang so über dem Mähbalken.

Bei einer Kollision einer herkömmlichen Mähvorrichtung mit z. B. einem Stein, kann es während eines Mähvorgangs zu erheblichen Beschädigungen an der Mähvorrichtung kommen oder sogar zu Verletzungen eines Benutzers.

Durch die Drehbarkeit kann ein Teil einer Kollisionsenergie in einer Kollision in unschädlicher Weise aufgenommen und z.B. in eine Ausweichbewegung überführt werden. Damit wird die erfindungsgemässe Balkenmähvorrichtung insbesondere abgebremst und die Mäheinheit kann aus dem Gefahrenbereich weggedreht werden. Somit stellt die Drehbarkeit der Mäheinheit ein sicherheitswesentliches Merkmal dar. In Verbindung mit der Flexwelle ist dies insbesondere deshalb von Bedeutung, als dass die Flexwelle aufgrund Ihrer Flexibilität die Übertragung der Antriebsbewegung auf die Schneidvorrichtung unabhängig von einer auftretenden Ausweichbewegung der Mäheinheit zum Tragrahmen sicherstellt.

Alternativ kann die Balkenmähvorrichtung auch ohne drehbare Mäheinheit ausgeführt sein.

Besonders bevorzugt ist eine erfindungsgemässe Balkenmähvorrichtung mit einem Scherbolzen zum Blockieren einer Rotationsbewegung zwischen der Mäheinheit und dem Tragrahmen. Dabei kann der Scherbolzen z.B. innerhalb des Tragrahmens und dem ersten oder zweiten Laufschuh gelagert sein. Der Scherbolzen ist dabei insbesondere so ausgeführt, dass erst ein Drehmoment über einer festgelegten Schwelle zu einer Abscherung des Scherbolzens führt. Erst wenn der Scherbolzen abgeschert ist, ist die Mäheinheit drehbar.

Der Scherbolzen verhindert dabei insbesondere ein ungewolltes verdrehen der Mäheinheit z.B. während eines Mähvorgangs. Zusätzlich kann der Scherbolzen bei einem Schervorgang einen Teil einer Kollisionsenergie aufnehmen und damit Beschädigungen an der Mäheinheit verhindern.

Alternativ kann die Balkenmähvorrichtung auch ohne Scherbolzen ausgeführt sein und z. B. lediglich durch eine definierte Klemmkraft an einem Verdrehen gehindert werden.

Eine besonders bevorzugte Ausführung der Erfindung ist die erfindungsgemässe Balkenmähvorrichtung mit einem Rückstellelement welches dazu ausgebildet ist, die Mäheinheit im Fall einer Rotation von einer Ausgangsposition relativ zu dem Tragrahmen um einen Rotationswinkel und um die Drehachse in die Ausgangsposition zurück zu überführen.

Das Rückstellelement kann dabei z.B. eine hydraulische oder pneumatische Zylinder-Kolben-Anordnung umfassen. Es kann auch alternativ oder zusätzlich eine mechanische Feder umfassen.

Vorteil des Rückstellelements ist eine geregelte und schnelle Rückführung der Mäheinheit nach einem Ausschwenken. Dadurch kann z.B. auf einen Scherbolzen verzichtet werden, wodurch keine nicht wiederverwendbaren Teile an der Balkenmähvorrichtung verwendet werden müssen.

Eine Alternative zum Rückstellelement ist der oben beschriebene Scherbolzen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Figur 1: eine erste erfindungsgemässe Balkenmähvorrichtung als isometrische Draufsicht;
- Figur 2: die erste Balkenmähvorrichtung als direkte Draufsicht;
- Figur 3: ein Kupplungselement mit einer V-förmigen Riemenanordnung und einer ersten und einer zweiten Flexwelle.

Grundsätzlich sind in den Figuren gleiche Teile mit gleichen Bezugszeichen versehen.

### Wege zur Ausführung der Erfindung

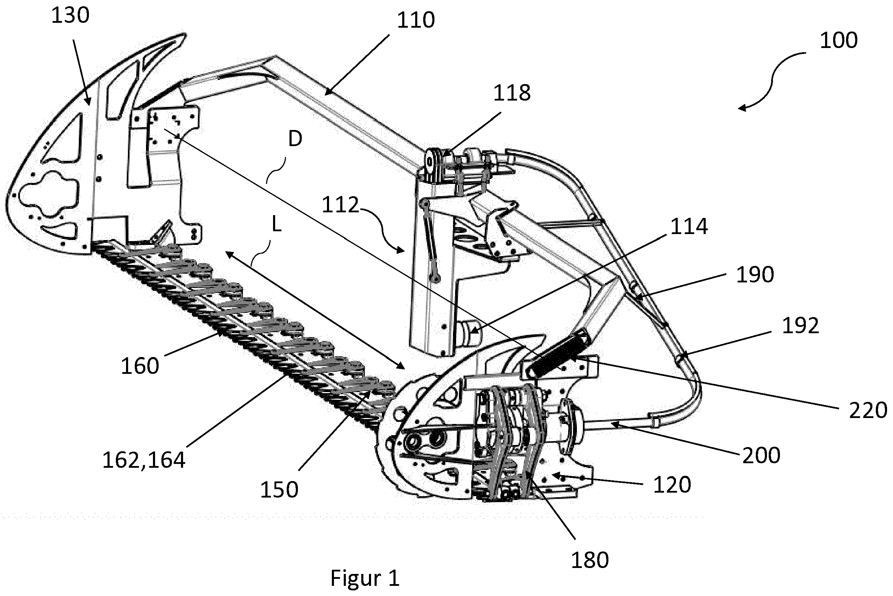

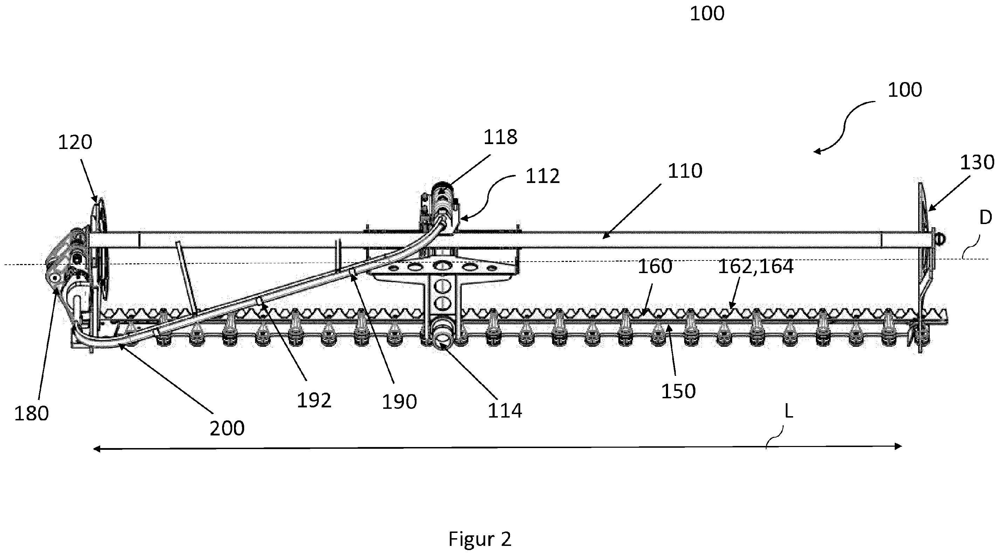

Figur 1 zeigt eine isometrische Draufsicht auf eine erfindungsgemässe Balkenmähvorrichtung 100. Figur 2 zeigt die Balkenmähvorrichtung 100 in einer direkten Draufsicht. Die Balkenmähvorrichtung 100 umfasst einen Tragrahmen 110, an dem eine Aufhängung 112 sowie ein erster Laufschuh 120 und ein zweiter Laufschuh 130 angeordnet sind. Dabei ist der Tragrahmen 110 in einem mittigen Bereich im Wesentlichen stangenförmig und aus Metall. An seinen äusseren Enden weist der Tragrahmen 110 jeweils Ausläufer auf, welche zusammen mit dem mittigen Bereich eine U-Form bilden.

Die Aufhängung 112 ist im mittleren Bereich des Tragrahmens 110 angeordnet, allerdings leicht seitlich von der Mitte des Tragrahmens 110 versetzt (siehe Figur 2). An der Aufhängung ist ein Kupplungselement 114 angeordnet, welches einen Kupplungsflansch umfasst, mittels dessen die Balkenmähvorrichtung 100 an einem einachsigen Fahrwerk eines Balkenmähers angeordnet werden kann. Das Kupplungselement 114 erlaubt das Übertragen einer Antriebsbewegung auf die erste Flexwelle 200.

Die Aufhängung umfasst einen Keilriemen, welcher der Übertragung der Antriebsbewegung vom Kupplungselement 114 zu der ersten Flexwelle 200 dient. Am Übergang von Keiliemen zu der ersten Flexwelle 200 befindet sich eine Überlastsicherung 118 in Form einer Rutschkupplung. Die Überlastsicherung 118 stellt im Fall einer Blockade der Schneidvorrichtung 160 sicher, dass keine Schädigung des Antriebsstrangs erfolgt.

Jeweils an einem äusseren Ausläufer des Tragrahmenns 110, einander gegenüberliegend, sind der erste Laufschuh 120 und der zweite Laufschuh 130 angeordnet. Die Laufschuhe 120, 130 sind dabei vom Tragrahmen 110 wegweisend abgerundet und flächig ausgebildet, wobei ihre Hauptflächen orthogonal zum mittleren Bereich des Tragrahmens 110 verlaufen. Der zweite Laufschuh 130 weist dabei eine grössere Fläche auf, als der erste Laufschuh 120.

Zwischen den Laufschuhen 120, 130 erstreckt sich ein Messerbalken 150, welcher durch die Laufschuhe 120, 130 gehalten wird und parallel zum mittleren Bereich des Tragrahmens 110 verläuft. Am Messerbalken 150 wiederum ist eine Schneidvorrichtung 160 angeordnet. Die Schneidvorrichtung 160 umfasst dabei ein erstes Schneidmesser 162 und ein zweites Schneidmesser 164 welche beweglich zueinander am Messerbalken 150 gelagert sind. Das erste und das zweite Schneidmesser 162, 164 haben dabei eine gemeinsame Länge L in Richtung einer Längserstreckungsrichtung des Messerbalkens 150, die 3 m beträgt. Das erste Schneidmesser 162 ist von einer ersten Übertragungseinheit 180 oszillierend bewegbar. Die erste Übertragungseinheit 180 ist an dem ersten Laufschuh 120 angeordnet und überträgt mittels eines Exzenters eine Antriebsbewegung, ausgehend von der Aufhängung 112 auf das erste Schneidmesser 162, wobei die erste Übertragungseinheit 180 das Schneidmesser 162 in Oszillation versetzt. Von der Aufhängung 112 verläuft für die Übertragung eine erste Flexwelle 200 zur ersten Übertragungseinheit 180. Die erste Flexwelle 200 besteht dabei aus Metall und ist drahtförmig und gebogen gelagert. Geführt wird die erste Flexwelle 200 mit einem Führungsmittel 190, welches eine Mehrzahl an Befestigungen 192 umfasst, die als Rohrschellen ausgebildet und am Tragrahmen 110 angebracht sind.

Der erste Laufschuh 120, der zweite Laufschuh 130, der Messerbalken 150 und die Schneidvorrichtung 160 bilden eine Mäheinheit und sind um eine Drehachse D relativ zum Tragrahmen 110 rotierbar ausgebildet. Dazu sind der erste und der zweite Laufschuh 120, 130 drehbar am Tragrahmen 110 gelagert.

Dabei befindet sich zwischen dem ersten Laufschuh 120 und dem Tragrahmen 110 ein Rückstellelement 220 zum Rückführen einer Rotationsbewegung zwischen der Mäheinheit und dem Tragrahmen 110, welches nur bei Überschreitung eines vorbestimmten Drehmoments auf die Mäheinheit elastisch verformt wird.

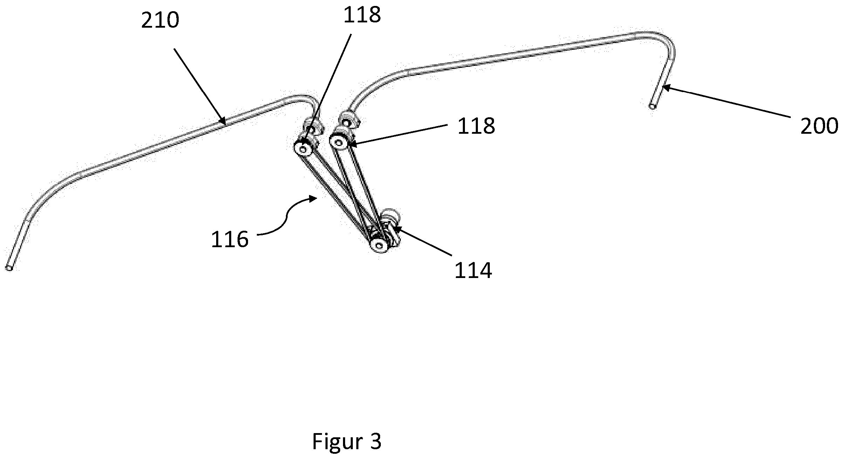

Figur 3 zeigt eine Keilriemenanordnung 116 zusammen mit einem Kupplungselement 114 und einer ersten Flexwelle 200 sowie einer zweiten Flexwelle 210 für eine Aufhängung einer weiteren erfindungsgemässen Mähbalkenanordnung. Die Keilriemenanordnung ist dabei V-förmig und umfasst einen ersten und einen zweiten Keilriemen. Am Kupplungselement 114 sind auf einer gemeinsamen Achse eine erste und eine zweite Führungsscheibe angeordnet, welche den ersten bzw. den zweiten Keilriemen führen. Der erste und der zweite Keilriemen gehen V-förmig vom Kupplungselement ab und umlaufen dann jeweils eine dritte bzw. eine vierte Führungsscheibe. Die dritte und die vierte Führungsscheibe sind dabei vom Kupplungselement 114 beabstandet und weisen zueinander einen Abstand auf, der grösser ist als ein maximaler Durchmesser der dritten oder vierten Führungsscheibe. Die dritte Führungsscheibe ist drehfest mit der ersten Flexwelle 200 verbunden und an deren Ende angeordnet. Entsprechend ist die vierte Führungsscheibe mit der zweiten Flexwelle 210 drehfest verbunden. Die erste und zweite Flexwelle 200, 210 sind dabei geeignet, eine erste und eine zweite Übertragungseinheit 180 (siehe Figur 1) anzutreiben.

Am Übergang vom ersten und zweiten Keilriemen zu der ersten und der zweiten Flexwelle 200, 210 befindet sich jeweils eine Überlastsicherung 118 in Form einer Rutschkupplung. Die Überlastsicherung 118 stellt im Fall einer Blockade der Schneidvorrichtung 160 sicher, dass keine Schädigung des Antriebsstrangs erfolgt.

Alternativ kann der Keilriemen auch durch eine Antriebskette ausgebildet sein, wobei dann eine zusätzliche Rutschkupplung als Überlastsicherung 118 zwischen Antriebskette und Flexwelle 200, 210 angeordnet werden muss.

Die Erfindung ist nicht auf die dargestellten Ausführungsbeispiele beschränkt. So kann die Balkenmähvorrichtung z.B. eine andere Länge aufweisen. Die Laufschuhe können eine andere, z.B. eine spitze, Form aufweisen. Der Tragrahmen kann eine andere Form, z.B. eine rein gerade Form aufweisen. Die Balkenmähvorrichtung 100 kann auch anstelle der Rückstelleinrichtung einen Scherbolzen umfassen.

## Patentansprüche

1. Balkenmähvorrichtung (100) mit:
einem Tragrahmen (110) mit einer Aufhängung (112) zum Anordnen der Balkenmähvorrichtung (100) an einem einachsigen oder an einem zweiachsigen Fahrwerk,
einem ersten Laufschuh (120) und einem zweiten Laufschuh (130), welche über den Tragrahmen (110) miteinander verbunden sind,
eine Schneidvorrichtung (160), welche sich parallel zu einem Messerbalken (150) zwischen dem ersten Laufschuh (120) und dem zweiten Laufschuh (130) erstreckt und mittels einer ersten Übertragungseinheit (180) oszillierend bewegbar ausgebildet ist, wobei die erste Übertragungseinheit (180) an dem ersten Laufschuh (120) angeordnet ist, und
eine erste Flexwelle (200), welche dazu ausgebildet ist, eine Antriebsbewegung von der Aufhängung (112) zu der ersten Übertragungseinheit (180) zu übertragen.

2. Balkenmähvorrichtung (100) nach Anspruch 1, wobei die Schneidvorrichtung (160) ein erstes Schneidmesser (162) und ein zweites Schneidmesser (164) umfasst, wobei das erste Schneidmesser (160) und das zweite Schneidmesser (162) relativ zueinander bewegbar ausgebildet sind.

3. Balkenmähvorrichtung (100) nach Anspruch 2, mit einer zweiten Übertragungseinheit (182), welche an dem zweiten Laufschuh (130) angeordnet ist, wobei die zweite Übertragungseinheit (182) dazu ausgebildet ist, das zweite Schneidmesser (164) oszillierend zu bewegen.

4. Balkenmähvorrichtung (100) nach Anspruch 3, mit einer zweiten Flexwelle (210), welche dazu ausgebildet ist, eine Antriebsbewegung von der Aufhängung (112) zu der zweiten Übertragungseinheit (182) zu übertragen.

5. Balkenmähvorrichtung (100) nach Anspruch 4, mit einem Kupplungselement (114) zum Einbringen der Antriebsbewegung und einer V-förmig ausgebildeten Keilriemenanordnung (116) zum Übertragen der Antriebsbewegung auf die erste Flexwelle (200) und die zweite Flexwelle (210).

6. Balkenmähvorrichtung (100) nach einem der vorstehenden Ansprüche, mit einem Führungsmittel (190) zum Führen der ersten Flexwelle (200) von der Aufhängung (112) zu der ersten Übertragungseinheit (180).

7. Balkenmähvorrichtung (100) nach Anspruch 6, wobei das Führungsmittel (190) eine Mehrzahl an Befestigungen (192) zum Fixieren der ersten Flexwelle (200) an dem Führungsmittel (190) umfasst.

8. Balkenmähvorrichtung (100) nach einem der vorstehenden Ansprüche, wobei eine Länge (L) des ersten und/oder des zweiten Schneidmessers (160,162) in Richtung einer Längserstreckungsrichtung des Messerbalkens (150) zumindest 1 m, insbesondere zumindest 2 m, insbesondere zumindest 3 m, insbesondere zumindest 5 m beträgt.

9. Balkenmähvorrichtung (100) nach einem der vorstehenden Ansprüche, wobei der erste Laufschuh (120), der zweite Laufschuh (130), der Messerbalken (150) und die Schneidvorrichtung (160) eine Mäheinheit bilden, und wobei die Mäheinheit um eine Drehachse (D) relativ zu dem Tragrahmen (110) rotierbar ausgebildet ist.

10. Balkenmähvorrichtung (100) nach Anspruch 9, mit einem Scherbolzen zum Blockieren einer Rotationsbewegung zwischen der Mäheinheit und dem Tragrahmen (110).

11. Balkenmähvorrichtung (100) nach Anspruch 9, mit einem Rückstellelement (220), welches dazu ausgebildet ist, die Mäheinheit im Fall einer Rotation von einer Ausgangsposition relativ zu dem Tragrahmen (110) um einen Rotationswinkel (α) und um die Drehachse (D) in die Ausgangsposition zurück zu überführen.
